# EUROPEAN PATENT SPECIFICATION

(11) **EP 3 041 121 B1**
(45) Date of publication and mention of the grant of the patent: **01.07.2020**
(21) Application number: 14856947.8
(22) Date of filing: 16.05.2014
(51) Int. Cl.: H02M 1/42, H02M 3/158, H02M 1/00

(54) **CONVERTER CONTROL DEVICE AND CONTROL METHOD, AND AIR CONDITIONER**
KONVERTERSTEURUNGSVORRICHTUNG UND STEUERUNGSVERFAHREN SOWIE KLIMAANLAGE
DISPOSITIF DE COMMANDE ET PROCÉDÉ DE COMMANDE DE CONVERTISSEUR, ET CONDITIONNEUR D'AIR

(30) Priority: 31.10.2013 JP 2013226929
(43) Date of publication of application: 06.07.2016
(73) Proprietor: Mitsubishi Heavy Industries, Ltd., Tokyo 108-8215 (JP)
(72) Inventor: SHIMIZU, Kenji, Tokyo 108-8215 (JP); SUMITO, Kiyotaka, Tokyo 108-8215 (JP); KANIE, Tetsuo, Tokyo 108-8215 (JP); SATO, Takeshi, Tokyo 108-8215 (JP); MIYATA, Masayuki, Nagoya-shi Aichi 453-0862 (JP)
(74) Representative: Cabinet Beau de Loménie
(86) International application number: PCT/JP2014/063071
(87) International publication number: WO 2015/064131

(56) References cited:
- EP-A2- 1 018 798
- JP-A- 2002 095 243
- JP-A- 2002 095 243
- JP-A- 2009 100 499
- JP-A- 2013 059 228
- JP-A- 2014 064 447
- US-A1- 2011 132 899

## Description

### Technical Field

The present invention relates to a converter control device and control method, and an air conditioner having the same.

### Background Art

As a converter device, a device disclosed in PTL 1 has hitherto been known. The converter device disclosed in PTL 1 is a device which converts AC power to DC power, and has two switching circuits of a basic switching circuit and an additional switching circuit for the purpose of reducing harmonics components and enhancing a power factor. Then, when a load is small, only the basic switching circuit is operated, and when a load is large, both the basic switching circuit and the additional switching circuit are operated.

Specifically, the converter device disclosed in PTL 1 has a comparison circuit which determines whether or not a current output from a rectifier is smaller than a reference current, a comparison circuit which determines whether or not a voltage across a smoothing capacitor is larger than a reference voltage, and a control signal switch which is turned on or off according to output signals from the two comparison circuits. The control signal switch is a switch which disconnects the connection between the additional switching circuit and the converter device. Besides, EP 1 018 798 discloses a control device according to the preamble of claim 1.

### Citation List

### Patent Literature

[PTL 1] Japanese Unexamined Patent Application Publication No. 2010-233439

### Summary of Invention

### Technical Problem

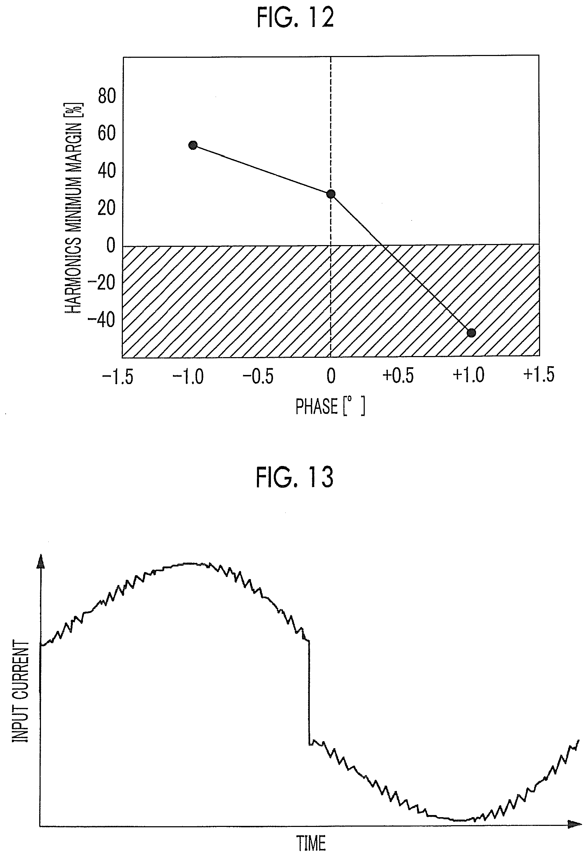

However, as shown in Fig. 12, the converter device disclosed in PTL 1 has a large change in a harmonics suppression amount with a change in phase. That is, in a case where the phase is -1.0 to 0, a harmonics minimum margin is equal to or greater than 0, and a prescribed harmonics specification can be satisfied. However, in a region where the phase exceeds +0.5, the harmonics minimum margin is less than 0 and the prescribed harmonics specification cannot be satisfied. This is because, if the phase is shifted, as shown in Fig. 13, the distortion of an input current is increased at a zero-cross point.

Accordingly, in the converter device of the related art disclosed in PTL 1 described above, it is not possible to follow the change in the harmonics suppression amount with the change in phase shown in Fig. 12, and it is difficult to simultaneously realize harmonics specifications and enhancement of a power factor. If a zero-cross point detection circuit or a phase detection circuit with high accuracy is used, it is possible to simultaneously realize reduction in harmonics and enhancement of a power factor; however, it is expensive and it is not realistic.

The invention has been accomplished in consideration of this situation, and an object of the invention is to provide a converter device and an air conditioner capable of satisfying harmonics specifications (for example, in a case of an air conditioner, IEC61000-3-2 and the like) and enhancing a power factor without using an expensive phase detection circuit or the like.

### Solution to Problem

A first aspect of the invention is a control device for a converter in which a plurality of power factor enhancement circuits having an inductor, a switching element, and a diode are connected in parallel. The control device includes phase calculation means for calculating a phase based on a zero-cross point of an input voltage, first phase correction means for setting a phase correction value using an input current detection signal, and drive signal generation means for correcting the phase calculated by the phase calculation means using the phase correction value set by the first phase correction means and generating a drive signal for driving the switching element using the phase after correction. The first phase correction means includes form factor calculation means for acquiring an input current maximum value and an input current average value from the input current detection signal and calculating a form factor by dividing the input maximum current value by the input current average value, target form factor acquisition means for setting a form factor leading to a power factor of a prescribed value or greater as a target form factor, retaining first information associating target form factors and input currents beforehand, and acquiring a target form factor corresponding to an input current value from the first information, and first phase correction value setting means for setting a phase correction value for causing the form factor to approach the target form factor.

According to the above-described aspect, the input current maximum value and the input current average value are acquired from the input current detection signal, the form factor is calculated from these values, the phase correction value for causing the form factor to approach the target form factor is set, and the drive signal for driving the switching element is generated using the phase correction value. In this way, since the phase correction value is determined using the form factor, it is possible to set an appropriate phase correction value in consideration of an actual waveform. With this, it is possible to reduce harmonics and satisfy harmonics specifications without using a high-accuracy phase detection circuit. Since the target form factor is the form factor leading to the power factor of the prescribed value or greater, it is possible to simultaneously perform enhancement of the power factor.

The control device for a converter may further include mode switching means for selecting a single mode of operating one power factor enhancement circuit in a case where the input current value is equal to or less than a prescribed current value and selecting a double mode of operating at least two power factor enhancement circuits in a case where the input current value exceeds the prescribed current value, first phase correction means for setting a phase correction value for a double mode, and second phase correction means for setting a phase correction value for a single mode. The second phase correction means may include target phase correction value acquisition means for setting a phase correction value leading to a power factor of a prescribed value or greater as a target phase correction value, retaining second information associating target phase correction values and input currents, and acquiring a target phase correction value corresponding to an input current value from the second information, and second phase correction value setting means for setting a phase correction value so as to match the target phase correction value. The drive signal generation means may generate the drive signal using the phase correction value set by the second phase correction means in a case where the single mode is selected by the mode switching means, and may generate the drive signal using the phase correction value set by the first phase correction means when the double mode is selected by the mode switching means.

According to the above-described configuration, in a case where the input current value is equal to or less than the prescribed current value, the single mode of operating one power factor enhancement circuit is selected; therefore, it is possible to reduce a loss due to switching. In a case where the single mode is selected, the drive signal is generated using the phase correction value set by the second phase correction means for a single mode; therefore, it is possible to perform switching control using an appropriate phase correction value according to the mode.

A second aspect of the invention is a converter device including the above-described control device.

A third aspect of the invention is a motor drive device including the above-described converter device.

A fourth aspect of the invention is an air conditioner including the above-described motor drive device.

A fifth aspect of the invention is a control method for a converter in which a plurality of power factor enhancement circuits having an inductor, a switching element, and a diode are connected in parallel. The control method includes a phase calculation step of calculating a phase based on a zero-cross point of an input voltage, a phase correction step of calculating a phase correction value using an input current detection signal, and a drive signal generation step of correcting the phase calculated in the phase calculation step using the phase correction value calculated in the phase correction step and generating a drive signal for driving the switching element using the phase after correction. The phase correction step includes a form factor calculation step of acquiring an input current maximum value and an input current average value from the input current detection signal and calculating a form factor by dividing the input current maximum value by the input current average value, a target form factor acquisition step of setting a form factor leading to a power factor of a prescribed value or greater as a target form factor, retaining information associating target form factors and input currents beforehand, and acquiring a target form factor corresponding to an input current from the information, and a phase correction value setting step of setting a phase correction value for causing the form factor to approach the target form factor.

A sixth aspect of the invention is a control method for a converter in which a plurality of power factor enhancement circuits having an inductor, a switching element, and a diode are connected in parallel. The control method includes a phase calculation step of calculating a phase based on a zero-cross point of an input voltage, a phase correction step of calculating a phase correction value using an input current detection signal, and a drive signal generation step of correcting the phase calculated in the phase calculation step using the phase correction value calculated in the phase correction step and generating a drive signal for driving the switching element using the phase after correction. The phase correction step includes a target phase correction value acquisition step of setting a phase correction value leading to a power factor of a prescribed value or greater as a target phase correction value, retaining information associating target phase correction values and input currents beforehand, and acquiring a target phase correction value corresponding to an input current value from the information, and a phase correction value setting step of setting a phase correction value so as to match the target phase correction value.

### Advantageous Effects of Invention

According to the invention, it is possible to satisfy harmonics specifications and enhance a power factor without using an expensive phase detection circuit or the like.

### Brief Description of Drawings

Fig. 1 is a diagram showing the schematic configuration of a motor drive device according to a first embodiment of the invention.
Fig. 2 is a diagram showing a configuration example of an input current detection unit.
Fig. 3 is a functional block diagram of a converter control unit according to the first embodiment of the invention.
Fig. 4 is a diagram showing an example of a target form factor table.
Fig. 5 is a diagram showing an example of a phase angle-power factor characteristic.
Fig. 6 is a diagram showing a form factor-phase angle characteristic.
Fig. 7 is a flowchart showing a procedure of processing which is executed by a phase correction value setting unit.
Fig. 8 is a functional block diagram of a converter control unit according to a second embodiment of the invention.
Fig. 9 is a diagram showing an example of a target phase correction value table.
Fig. 10 is a flowchart showing a procedure of processing which is executed by a phase correction value setting unit in a second phase correction unit.
Fig. 11 is a diagram showing another configuration example of the converter device.
Fig. 12 is a diagram illustrating the relationship between a phase change and a harmonics suppression amount.
Fig. 13 is a diagram showing a form example of an input current when harmonics are high.

### Description of Embodiments

Hereinafter, each embodiment in which a converter device of the invention is applied to a motor drive device for driving a compressor motor of an air conditioner will be described referring to the drawings. The application of the converter device of the invention is not limited to an air conditioner, and the converter device of the invention can be widely applied to a device which converts AC power from an AC power source to DC power and uses DC power.

### [First Embodiment]

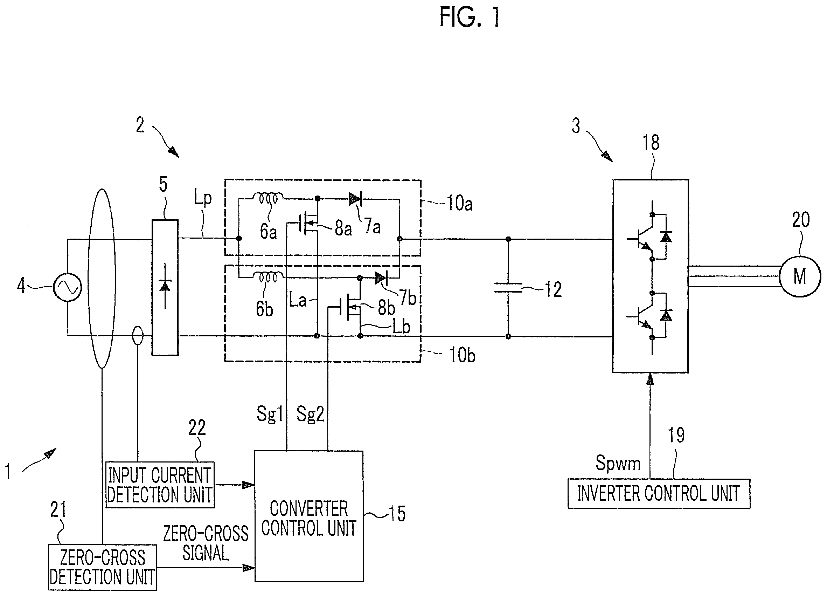

Fig. 1 is a diagram showing the schematic configuration of a motor drive device according to a first embodiment of the invention. As shown in Fig. 1, a motor drive device 1 includes a converter device 2 which converts AC power from an AC power source 4 to DC power and outputs DC power, and an inverter device 3 which converts DC power output from the converter device 2 to three-phase AC power and outputs three-phase AC power to a compressor motor (load) 20.

The converter device 2 includes, as a main configuration, a rectifier circuit 5 which converts AC power input from the AC power source 4 to DC power, a smoothing capacitor 12 which is connected in parallel to the rectifier circuit 5 on a DC current output side of the rectifier circuit 5, a plurality of power factor enhancement circuits 10a and 10b which are provided in parallel between the rectifier circuit 5 and the smoothing capacitor 12, and a converter control unit (converter control device) 15 which controls power factor enhancement circuits 10a and 10b. In this embodiment, although a case where two power factor enhancement circuits 10a and 10b are provided is illustrated, the number of power factor enhancement circuits is not particularly limited, and may be three or more.

The power factor enhancement circuit 10a has an inductor (inductive element) 6a which is provided in series to a positive electrode bus bar Lp connecting the rectifier circuit 5 and the smoothing capacitor 12, a diode 7a which is connected in series to a current output side of the inductor 6a, and a switching element 8a, one end of which is connected between the inductor 6a and the diode 7a and which is connected in parallel to the rectifier circuit 5.

Similarly, the power factor enhancement circuit 10b has an inductor 6b which is provided in series to the positive electrode bus bar Lp connecting the rectifier circuit 5 and the smoothing capacitor 12, a diode 7b which is connected in series to a current output side of the inductor 6b, and a switching element 8b, one end of which is connected between the inductor 6b and the diode 7b and which is connected in parallel to the rectifier circuit 5.

As an example of the switching elements 8a and 8b, a field effect transistor (FET), an insulated gate bipolar transistor (IGBT), or the like is considered.

The switching elements 8a and 8b and the diodes 7a and 7b may be elements using silicon carbide (SiC). In this way, a semiconductor using silicon carbide is used, whereby it is possible to enhance a switching characteristic or an on-state power loss characteristic.

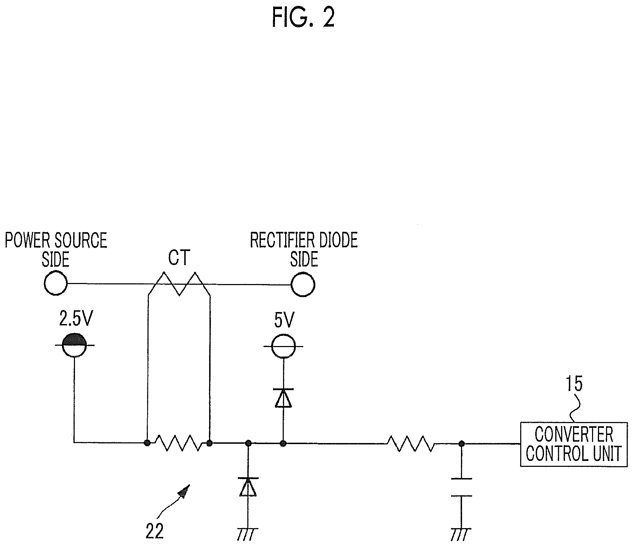

The AC power source 4 is provided with a zero-cross detection unit 21 which detects a zero-cross point. The zero-cross signal from the zero-cross detection unit 21 is output to the converter control unit 15. An input current detection unit 22 which detects an input current input from the AC power source 4 to the rectifier circuit 5 is provided. Fig. 2 shows a configuration example of the input current detection unit 22. As shown in Fig. 2, the input current detection unit 22 is configured to detect the waveform of the input current. An input current detection signal detected by the input current detection unit 22 is output to the converter control unit 15.

The inverter device 3 includes a bridge circuit 18 having six switching elements, and an inverter control unit 19 which controls switching of the switching elements in the bridge circuit 18. For example, the inverter control unit 19 generates a gate drive signal Spwm of each switching element based on a requested rotation speed command input from a host device (not shown) and gives the gate drive signal Spwm to the bridge circuit 18. As an example of a specific method of inverter control, vector control, sensorless vector control, V/F control, overmodulation control, one-pulse control, or the like is considered.

The converter control unit 15 is, for example, a micro processing unit (MPU), and has a computer-readable recording medium having recorded therein a program for executing each kind of processing described below. A CPU reads the program recorded in the recording medium to a main storage device, such as a RAM, and executes the program, whereby each kind of processing described below is realized. As the computer-readable recording medium, for example, a magnetic disk, a magneto-optical disk, a semiconductor memory, or the like is considered.

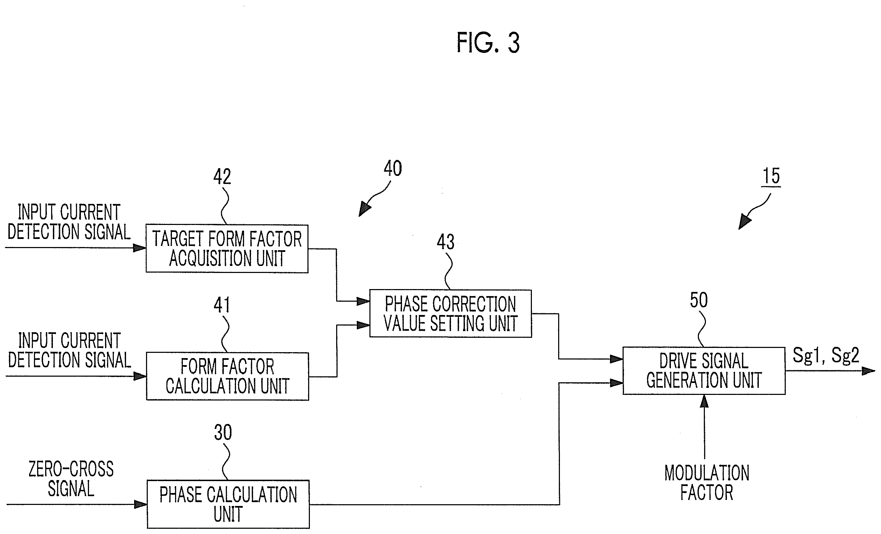

Fig. 3 is a functional diagram of the converter control unit 15. As shown in Fig. 3, the converter control unit 15 primarily includes a phase calculation unit (phase calculation means) 30, a phase correction unit (first phase correction means) 40, and a drive signal generation unit (drive signal generation means) 50.

The phase calculation unit 30 calculates a phase θ based on the zero-cross signal detected by the zero-cross detection unit 21 and outputs the phase θ.

The phase correction unit 40 calculates a phase correction value using an input current detection signal detected by the input current detection unit 22. Specifically, the phase correction unit 40 primarily includes a form factor calculation unit (form factor calculation means) 41, a target form factor acquisition unit (target form factor acquisition means) 42, and a phase correction value setting unit (first phase correction value setting means) 43.

The form factor calculation unit 41 acquires an input current maximum value and an input current average value from the input current detection signal, and divides the input current maximum value by the input current average value to calculate a form factor.

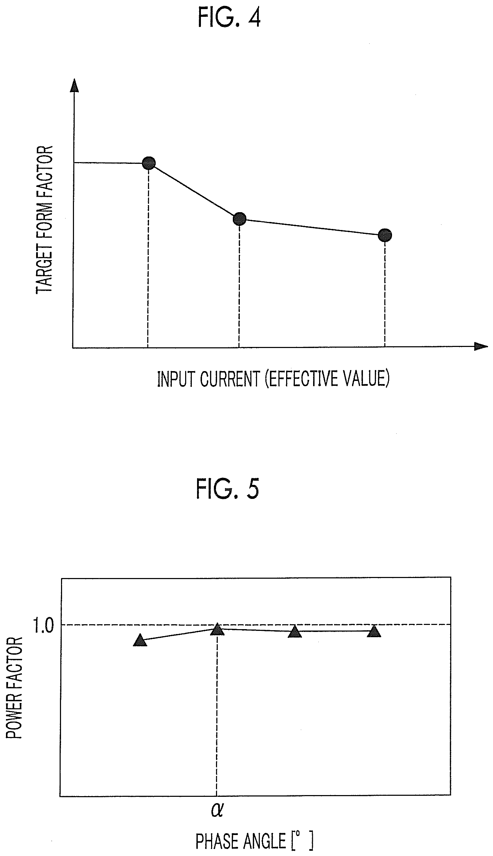

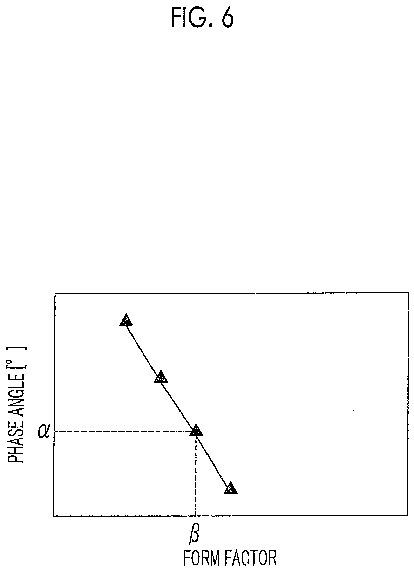

The target form factor acquisition unit 42 sets a form factor leading to a power factor of a prescribed value or greater as a target form factor, retains a target form factor table (first information) associating target form factors and input currents beforehand, and acquires a target form factor corresponding to an input current from the target form factor table. Fig. 4 shows an example of the target form factor table. In Fig. 4, the horizontal axis indicates an input current (effective value), and the vertical axis indicates a target form factor. The target form factor table is created, for example, using data obtained by performing a test or a simulation beforehand. For example, the relationship of the power factor, the phase angle, and the form factor when the phase angle is changed within a prescribed range at a certain input current is obtained. For example, a phase angle-power factor characteristic shown in Fig. 5 and a form factor-phase angle characteristic shown in Fig. 6 are obtained.

Subsequently, a phase angle leading to a power factor of the prescribed value or greater, for example, a phase angle leading to a maximum power factor is specified as a representative phase angle from the phase angle-power factor characteristic shown in Fig. 5, and a form factor when the representative phase angle is taken is obtained from the phase angle-form factor characteristic shown in Fig. 6. The thus-obtained form factor is set as the target form factor at the input current (for example, effective value).

Then, the above-described procedure is performed with each input current value in a prescribed range, whereby a target form factor table shown in Fig. 4 associating input currents and target form factors is created.

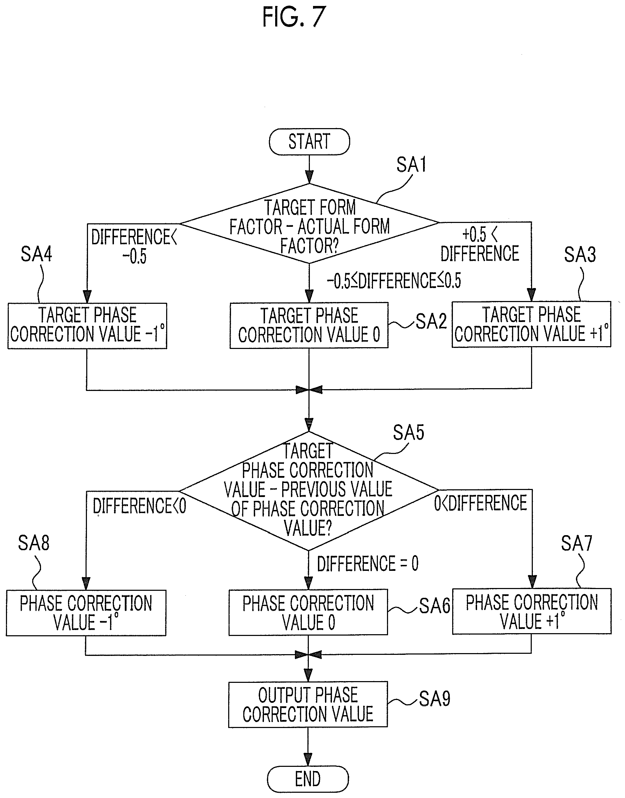

The phase correction value setting unit 43 set a phase correction value for causing the form factor calculated by the form factor calculation unit 41 to approach the target form factor acquired by the target form factor acquisition unit 42. For example, as shown in Fig. 7, the phase correction value setting unit 43 calculates the difference between a target form factor and an actual form factor (Step SA1), if the difference is within a prescribed allowable range (for example, equal to or greater than -0.5° and equal to or less than +0.5°), sets the target phase correction value to zero (Step SA2), if the difference exceeds an upper limit value of the prescribed allowable range, sets the target phase correction value to +1° (Step SA3), and if the difference falls below a lower limit value of the prescribed allowable range, sets the target phase correction value to -1° (Step SA4).

Next, the difference between the target phase correction value set in Steps SA2 to SA4 and a previous value of the phase correction value (that is, a phase correction value determined before one sampling period) is calculated (Step SA5).

As a result, the phase correction value is set to zero in a case where the difference is zero (Step SA6), the phase correction value is set to +1° in a case where the difference is greater than 0 (Step SA7), the phase correction value is set to -1° in a case where the difference is less than 0 (Step SA8), and the set phase correction value is output to the drive signal generation unit 50 (Step SA9).

The drive signal generation unit 50 corrects the phase θ calculated by the phase calculation unit 30 using the phase correction value calculated by the phase correction unit 40 and generates drive signals Sg1 and Sg2 for driving the switching elements 8a and 8b using the phase after correction.

Specifically, the phase θ is corrected by adding the phase correction value φ to the phased θ, generates a voltage waveform based on the phase after correction and a modulation factor command, and compares the voltage waveform with a carrier signal to generate the drive signals Sg1 and Sg2. A dead time is provided such that the drive signals Sg1 and Sg2 do not have time to be simultaneously turned on.

The drive signals Sg1 and Sg2 generated by the drive signal generation unit 50 are respectively given to the gate drive circuits of the switching elements 8a and 8b, whereby the on/off state of the switching elements 8a and 8b is controlled.

Next, the operation of the converter device 2 having the above-described configuration will be described referring to Figs. 1 to 7.

First, a zero-cross point of the AC power source 4 is detected by the zero-cross detection unit 21, and a zero-cross signal is output to the converter control unit 15. An input current is detected by the input current detection unit 22, and an input current detection signal is output to the converter control unit 15.

In the converter control unit 15, the phase calculation unit 30 calculates the phase θ based on the zero-cross signal from the zero-cross detection unit 21 and outputs the phase θ to the drive signal generation unit 50.

In the phase correction unit 40, the form factor calculation unit 41 acquires an input current maximum value and an input current average value are from the input current detection signal detected by the input current detection unit 22 and calculates a form factor using the input current maximum value and the input current average value. The target form factor acquisition unit 42 acquires a target form factor corresponding to an input current effective value of the input current detection signal from the target form factor table shown in Fig. 3.

Subsequently, the phase correction value setting unit 43 sets a phase correction value for causing the form factor calculated by the form factor calculation unit 41 to approach the target form factor acquired by the target form factor acquisition unit 42 and outputs the phase correction value to the drive signal generation unit 50 according to the procedure of Fig. 7.

The drive signal generation unit 50 corrects the phase θ by adding the phase correction value calculated by the phase correction unit 40 to the phase θ calculated by the phase calculation unit 30 and generates the drive signals Sg1 and Sg2 for driving the switching elements 8a and 8b using the phase after correction. The drive signals Sg1 and Sg2 generated by the drive signal generation unit 50 are respectively given to the gate drive circuits of the switching elements 8a and 8b, whereby the on/off state of the switching elements 8a and 8b is controlled.

As described above, according to the converter device 2 and the air conditioner of this embodiment, the input current maximum value and the input current average value are acquired from the input current detection signal, the form factor is calculated from these values, the phase correction value for causing the form factor to approach the target form factor is set, and the drive signals for driving the switching elements 8a and 8b are generated using the phase correction value. In this way, since the phase correction value is determined using the form factor, it is possible to set an appropriate phase correction value in consideration of an actual waveform situation. With this, it is possible to reduce harmonics and satisfy harmonics specification without using an expensive phase detection circuit. Since the target form factor is the form factor leading to the power factor of the prescribed value or greater, it is possible to simultaneously perform enhancement of the power factor.

### [Second Embodiment]

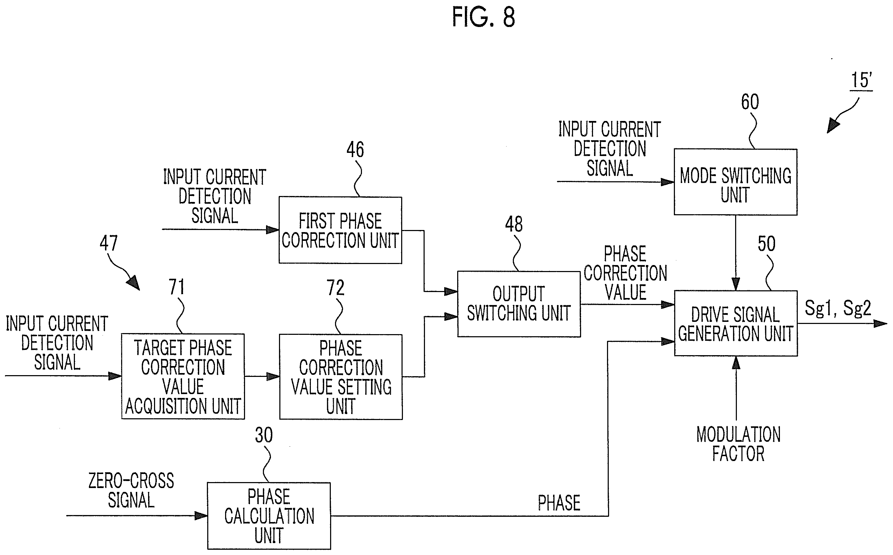

Next, a converter device and an air conditioner according to a second embodiment of the invention will be described. Fig. 8 is a functional block diagram of a converter control unit 15' of a converter device according to this embodiment. As shown in Fig. 8, the converter control unit 15' is different from the converter control unit 15 of the first embodiment described above in that a mode switching unit (mode switching means) 60, a first phase correction unit (first phase correction means) 46, a second phase correction unit (second phase correction means) 47, and an output switching unit 48 are provided.

Hereinafter, description will be provided focusing on the difference from the converter control unit 15 of the first embodiment, and description of common parts will not be repeated.

The mode switching unit 60 selects a single mode of operating one power factor enhancement circuit 10a in a case where the input current effective value is equal to or less than a prescribed current value and selects a double mode of operating at least two power factor enhancement circuits 10a and 10b in a case where the input current effective value exceeds the prescribed current value. In a case where the single mode is selected by the mode switching unit 60, for example, the above-described drive signal Sg1 is output from the converter control unit 15' only to the gate drive circuit (not shown) of the switching element 8a, and the drive signal Sg2 for maintaining the off state is output to the gate drive circuit (not shown) of the switching element 8b.

The first phase correction unit 46 sets a phase correction value for a double mode, and has the same configuration and function as the phase correction unit 40 of the first embodiment described above.

The second phase correction unit 47 sets a phase correction value for a single mode, and primarily includes a target phase correction value acquisition unit (target phase correction value acquisition means) 71 and a phase correction value setting unit (second phase correction value setting means) 72. The target phase correction value acquisition unit 71 sets a phase correction value leading to a power factor of a prescribed value greater as a target phase correction value, retains target phase correction value table (second information) associating target phase correction values and input currents beforehand, and acquires a target phase correction value corresponding to an input current from the target phase correction value table.

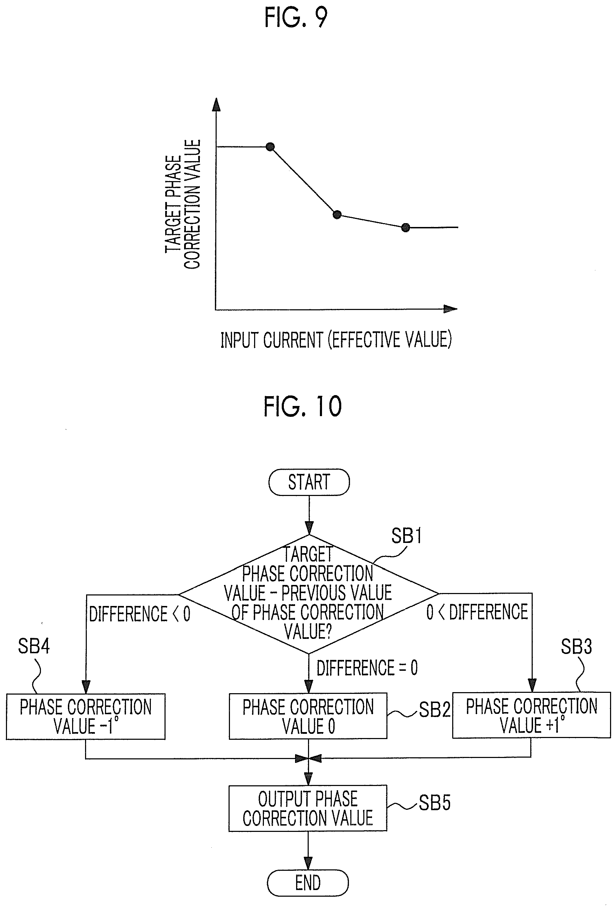

Fig. 9 shows an example of the target phase correction value table. In Fig. 9, the horizontal axis indicates an input current, and the vertical axis indicates a target phase correction value. The target phase correction value table is created, for example, based on data obtained by performing a test or a simulation beforehand.

The phase correction value setting unit 72 sets a phase correction value based on the target phase correction value acquired by the target phase correction value acquisition unit 71. For example, as shown in Fig. 10, the phase correction value setting unit 72 calculates the difference between the target phase correction value and a previous value of the phase correction value (Step SB1), sets the phase correction value to zero in a case where the different is zero (Step SB2), sets the phase correction value to +1° in a case where the difference is greater than 0 (Step SB3), sets the phase correction value to -1° in a case where the difference is less than 0 (Step SB4), and outputs the set phase correction value (Step SB5).

The output switching unit 48 outputs the phase correction value output from the first phase correction unit 46 to the drive signal generation unit 50 in a case where the double mode is selected by the mode switching unit 60 and outputs the phase correction value output from the second phase correction unit 47 to the drive signal generation unit 50 in a case where the single mode is selected.

With this, in a case where the double mode is selected, the drive signal generation unit 50 corrects the phase θ calculated by the phase calculation unit 30 using the phase correction value set by the first phase correction unit 46 and generates the drive signals Sg1 and Sg2 for driving the switching elements 8a and 8b using the phase after correction. In a case where the single mode is selected, the drive signal generation unit 50 corrects the phase θ calculated by the phase calculation unit 30 using the phase correction value set by the second phase correction unit 47 and generates the drive signal Sg1 for driving the switching element 8a using the phase after correction.

In this way, according to the converter device and the air conditioner of this embodiment, in a case where the input current effective value is equal to or less than the prescribed current value, the single mode of operating one power factor enhancement circuit 10a is selected, therefore, it is possible to reduce a loss due to switching. In a case where the single mode is selected, since the phase θ calculated by the phase calculation unit 30 is corrected using the phase correction value set by the second phase correction unit 47 for a single mode, therefore, it is possible to perform switching control using an appropriate phase correction value according to the mode.

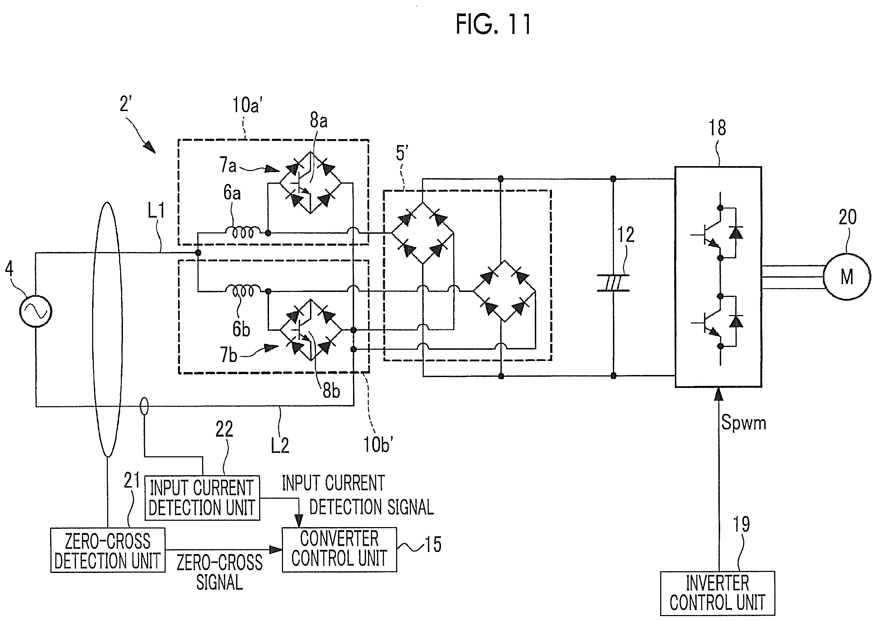

In the respective embodiments described above, although the power factor enhancement circuits 10a and 10b are provided closer to the inverter device side than the rectifier circuit 5, the power factor enhancement circuits 10a and 10b are not limited to the above-described configuration, and the arrangement position is not particularly limited. For example, as shown in Fig. 11, power factor enhancement circuits 10a' and 10b' may be provided between an AC power source 4 and a rectifier circuit 5'. In this case, since an AC current is input to the power factor enhancement circuits 10a' and 10b', a diode 7b is connected such that a current flows in two directions. The converter control unit 15 or 15' of the first or second embodiment described above can be applied to the converter device 2' having the power factor enhancement circuits 10a' and 10b'.

The invention is not limited to the above-described embodiments, and for example, various modifications may be made by partially or entirely combining the above-described embodiments. The invention is defined by the features of the independent claims. Preferred embodiments are defined by the dependent claims.

### Reference Signs List

- 1:: motor drive device
- 2, 2':: converter device
- 3:: inverter device
- 4:: AC power source
- 5:: rectifier circuit
- 6a, 6b:: inductor
- 7a, 7b:: diode
- 8a, 8b:: switching element
- 10a, 10b:: power factor enhancement circuit
- 12:: smoothing capacitor
- 15, 15':: converter control unit
- 21:: zero-cross detection unit
- 22:: input current detection unit
- 30:: phase calculation unit
- 40:: phase correction unit
- 41:: form factor calculation unit
- 42:: target form factor acquisition unit
- 43:: phase correction value setting unit
- 46:: first phase correction unit
- 47:: second phase correction unit
- 48:: output switching unit
- 71:: target phase correction value acquisition unit
- 72:: phase correction value setting unit
- 50:: drive signal generation unit
- 60:: mode switching unit
- Lp:: positive electrode bus bar
- L1:: power line

## Claims

1. A control device (15, 15') for a converter in which a plurality of power factor enhancement circuits (10a, 10b) having an inductor (6a, 6b), a switching element (8a, 8b), and a diode (7a, 7b) are connected in parallel, the control device comprising:
phase calculation means (30) configured to calculate a phase based on a zero-cross point of an input voltage;
first phase correction means (40, 46) configured to set a phase correction value (φ) using an input current detection signal;
drive signal generation means (50) configured to correct the phase (θ) calculated by the phase calculation means (30) using the phase correction value (φ) set by the first phase correction means (40, 46) and to generate a drive signal (Sg1, Sg2) for driving the switching element (8a, 8b) using the phase after correction,
**characterized in that** the first phase correction means (40, 46) includes
form factor calculation means (41) configured to acquire an input current maximum value and an input current average value from the input current detection signal and to calculate a form factor by dividing the input current maximum value by the input current average value,
target form factor acquisition means (42) configured to set a form factor leading to a power factor of a prescribed value or greater as a target form factor, to retain first information associating target form factors and input currents beforehand, and to acquire a target form factor corresponding to an input current value from the first information, and
first phase correction value setting means (43) configured to set a phase correction value for causing the form factor to approach the target form factor.

2. The control device (15') for a converter according to claim 1, further comprising:
mode switching means (60) configured to select a single mode of operating one power factor enhancement circuit (8a) in a case where the input current value is equal to or less than a prescribed current value and to select a double mode of operating at least two power factor enhancement circuits (8a, 8b) in a case where the input current value exceeds the prescribed current value,
first phase correction means (46) configured to set a phase correction value for a double mode; and
second phase correction means (47) configured to set a phase correction value for a single mode,
wherein the second phase correction means includes
target phase correction value acquisition means (71) configured to set a phase correction value leading to a power factor of a prescribed value or greater as a target phase correction value, to retain second information associating target phase correction values and input currents, and to acquire a target phase correction value corresponding to an input current value from the second information, and
second phase correction value setting means (72) configured to set a phase correction value so as to match the target phase correction value, and
the drive signal generation means (50) is configured to generate the drive signal (Sg1, Sg2) using the phase correction value set by the second phase correction means (47) in a case where the single mode is selected by the mode switching means (60), and to generate the drive signal using the phase correction value set by the first phase correction means (46) when the double mode is selected by the mode switching means (60).

3. A converter device (2, 2') comprising:
a converter in which a plurality of power factor enhancement circuits (10a, 10b) having an inductor (6a, 6b), a switching element (8a, 8b), and a diode (7a, 7b) are connected in parallel; and
the control device (15, 15') according to claim 1 or 2.

4. A motor drive device (1) comprising:
the converter device (2, 2') according to claim 3.

5. An air conditioner comprising:
the motor drive device (1) according to claim 4.

6. A control method for a converter (2, 2') in which a plurality of power factor enhancement circuits (10a, 10b) having an inductor (6a, 6b), a switching element (8a, 8b), and a diode (7a, 7b) are connected in parallel, the control method comprising:
a phase calculation step of calculating a phase (θ) based on a zero-cross point of an input voltage;
a phase correction step of calculating a phase correction value using an input current detection signal; and
a drive signal generation step of correcting the phase calculated in the phase calculation step using the phase correction value calculated in the phase correction step and generating a drive signal for driving the switching element using the phase after correction,
**characterized in that** the phase correction step includes
a form factor calculation step of acquiring an input current maximum value and an input current average value from the input current detection signal and calculating a form factor by dividing the input current maximum value by the input current average value,
a target form factor acquisition step of setting a form factor leading to a power factor of a prescribed value or greater as a target form factor, retaining information associating target form factors and input currents beforehand, and acquiring a target form factor corresponding to an input current from the information, and
a phase correction value setting step of setting a phase correction value for causing the form factor to approach the target form factor.

7. A control method for a converter (2, 2') in which a plurality of power factor enhancement circuits (10a, 10b) having an inductor (6a, 6b), a switching element (8a, 8b), and a diode (7a, 7b) are connected in parallel, the control method comprising:
a phase calculation step of calculating a phase based on a zero-cross point of an input voltage;
a phase correction step of calculating a phase correction value using an input current detection signal; and
a drive signal generation step of correcting the phase calculated in the phase calculation step using the phase correction value calculated in the phase correction step and generating a drive signal for driving the switching element using the phase after correction,
**characterized in that** the phase correction step includes
a target phase correction value acquisition step of setting a phase correction value leading to a power factor of a prescribed value or greater as a target phase correction value, retaining information associating target phase correction values and input currents beforehand, and acquiring a target phase correction value corresponding to an input current value from the information, and
a phase correction value setting step of setting a phase correction value so as to match the target phase correction value.

## Patentansprüche

1. Steuervorrichtung (15, 15') für einen Wandler, in dem eine Vielzahl von Leistungsfaktorverbesserungsschaltungen (10a, 10b) mit einem Induktor (6a, 6b), einem Umschaltelement (8a, 8b) und einer Diode (7a, 7b) parallel verbunden sind, wobei die Steuervorrichtung Folgendes umfasst:
ein Phasenberechnungsmittel (30), das dazu ausgelegt ist, eine Phase auf Basis eines Nulldurchgangspunktes einer Eingangsspannung zu berechnen;
ein erstes Phasenkorrekturmittel (40, 46), das dazu ausgelegt ist, einen Phasenkorrekturwert (φ) unter Verwendung eines Eingangsstromdetektionssignals einzustellen;
ein Ansteuersignalerzeugungsmittel (50), das dazu ausgelegt ist, die Phase (θ), die vom Phasenberechnungsmittel (30) berechnet wird, unter Verwendung des Phasenkorrekturwertes (φ), der vom ersten Phasenkorrekturmittel (40, 46) eingestellt wird, zu korrigieren und unter Verwendung der Phase nach der Korrektur ein Ansteuersignal (Sg1, Sg2) zum Ansteuern des Umschaltelements (8a, 8b) zu erzeugen,
**dadurch gekennzeichnet, dass** das erste Phasenkorrekturmittel (40, 46) Folgendes beinhaltet
ein Formfaktorberechnungsmittel (41), das dazu ausgelegt ist, aus dem Eingangsstromdetektionssignal einen Eingangsstrommaximalwert und einen Eingangsstromdurchschnittswert zu erfassen und durch Teilen des Eingangsstrommaximalwerts durch den Eingangsstromdurchschnittswert einen Formfaktor zu berechnen,
ein Sollformfaktorerfassungsmittel (42), das dazu ausgelegt ist, einen Formfaktor, der zu einem Leistungsfaktor eines vorgeschriebenen Wertes oder größer führt, als einen Sollformfaktor einzustellen, erste Informationen, die Sollformfaktoren und Eingangsströme verknüpfen, vorab zu halten und aus den ersten Informationen einen Sollformfaktor zu erfassen, der dem Eingangsstromwert entspricht, und
ein erstes Phasenkorrekturwerteinstellmittel (43), das dazu ausgelegt ist, zum Bewirken, dass sich der Formfaktor dem Sollformfaktor annähert, einen Phasenkorrekturwert einzustellen.

2. Steuervorrichtung (15') für einen Wandler nach Anspruch 1, die ferner Folgendes umfasst:
ein Modusumschaltmittel (60), das dazu ausgelegt ist, in einem Fall, in dem der Eingangsstromwert gleich oder kleiner als ein vorgeschriebener Stromwert ist, zum Betreiben einer Leistungsfaktorverbesserungsschaltung (8a) einen Einzelmodus auszuwählen, und in einem Fall, in dem der Eingangsstromwert den vorgeschriebenen Stromwert überschreitet, zum Betreiben von mindestens zwei Leistungsfaktorverbesserungsschaltungen (8a, 8b) einen Doppelmodus auszuwählen,
ein erstes Phasenkorrekturmittel (46), das dazu ausgelegt ist, einen Phasenkorrekturwert für einen Doppelmodus einzustellen; und
ein zweites Phasenkorrekturmittel (47), das dazu ausgelegt ist, einen Phasenkorrekturwert für einen Einzelmodus einzustellen,
wobei das zweite Phasenkorrekturmittel Folgendes beinhaltet
ein Phasenkorrektursollwerterfassungsmittel (71), das dazu ausgelegt ist, einen Phasenkorrekturwert, der zu einem Leistungsfaktor eines vorgeschriebenen Wertes oder größer führt, als einen Phasenkorrektursollwert einzustellen, zweite Informationen, die Phasenkorrektursollwerte und Eingangsströme verknüpfen, zu halten und einen Phasenkorrektursollwert, der einem Eingangsstromwert entspricht, aus den zweiten Informationen zu erfassen, und
ein zweites Phasenkorrekturwerteinstellmittel (72), das dazu ausgelegt ist, einen Phasenkorrekturwert zum Angleichen an den Phasenkorrektursollwert einzustellen, und
das Ansteuersignalerzeugungsmittel (50) ist dazu ausgelegt, in einem Fall, in dem der Einzelmodus vom Modusumschaltmittel (60) ausgewählt wird, das Ansteuersignal (Sg1, Sg2) unter Verwendung des Phasenkorrekturwertes, der vom zweiten Phasenkorrekturmittel (47) eingestellt wird, zu erzeugen, und das Ansteuersignal unter Verwendung des Phasenkorrekturwertes, der vom ersten Phasenkorrekturmittel (46) eingestellt wird, zu erzeugen, wenn der Doppelmodus vom Modusumschaltmittel (60) ausgewählt wird.

3. Wandlervorrichtung (2, 2'), die Folgendes umfasst:
einen Wandler, in dem eine Vielzahl von Leistungsfaktorverbesserungsschaltungen (10a, 10b) mit einem Induktor (6a, 6b), einem Umschaltelement (8a, 8b) und einer Diode (7a, 7b) parallel verbunden sind; und
die Steuervorrichtung (15, 15') nach Anspruch 1 oder 2.

4. Motoransteuervorrichtung (1), die Folgendes umfasst:
die Wandlervorrichtung (2, 2') nach Anspruch 3.

5. Klimaanlage, die Folgendes umfasst:
die Motoransteuervorrichtung (1) nach Anspruch 4.

6. Steuerverfahren für einen Wandler (2, 2'), in dem eine Vielzahl von Leistungsfaktorverbesserungsschaltungen (10a, 10b) mit einem Induktor (6a, 6b), einem Umschaltelement (8a, 8b) und einer Diode (7a, 7b) parallel verbunden sind, wobei das Steuerverfahren Folgendes umfasst:
einen Schritt der Phasenberechnung zum Berechnen einer Phase (θ) auf Basis eines Nulldurchgangspunktes einer Eingangsspannung;
einen Schritt der Phasenkorrektur zum Berechnen eines Phasenkorrekturwertes unter Verwendung eines Eingangsstromdetektionssignals; und
einen Schritt der Ansteuersignalerzeugung zum Korrigieren der Phase, die im Schritt der Phasenberechnung berechnet wird, unter Verwendung des Phasenkorrekturwertes, der im Schritt der Phasenkorrektur berechnet wird, und Erzeugen eines Ansteuersignals zum Ansteuern des Umschaltelements unter Verwendung der Phase nach der Korrektur,
**dadurch gekennzeichnet, dass** der Schritt der Phasenkorrektur Folgendes beinhaltet
einen Schritt der Formfaktorberechnung zum Erfassen eines Eingangsstrommaximalwertes und eines Eingangsstromdurchschnittswertes aus dem Eingangsstromdetektionssignal und Berechnen eines Formfaktors durch Teilen des Eingangsstrommaximalwertes durch den Eingangsstromdurchschnittswert,
einen Schritt der Sollformfaktorerfassung zum Einstellen eines Formfaktors, der zu einem Leistungsfaktor eines vorgeschriebenen Wertes oder größer führt, als einen Sollformfaktor, vorab Halten von Informationen, die Sollformfaktoren und Eingangsströme verknüpfen, und Erfassen eines Sollformfaktors, der einem Eingangsstrom entspricht, aus den Informationen, und
einen Schritt der Phasenkorrekturwerteinstellung zum Einstellen eines Phasenkorrekturwertes, zum Bewirken, dass sich der Formfaktor dem Sollformfaktor annähert.

7. Steuerverfahren für einen Wandler (2, 2'), in dem eine Vielzahl von Leistungsfaktorverbesserungsschaltungen (10a, 10b) mit einem Induktor (6a, 6b), einem Umschaltelement (8a, 8b) und einer Diode (7a, 7b) parallel verbunden sind, wobei das Steuerverfahren Folgendes umfasst:
einen Schritt der Phasenberechnung zum Berechnen einer Phase auf Basis eines Nulldurchgangspunktes einer Eingangsspannung;
einen Schritt der Phasenkorrektur zum Berechnen eines Phasenkorrekturwertes unter Verwendung eines Eingangsstromdetektionssignals; und
einen Schritt der Ansteuersignalerzeugung zum Korrigieren der Phase, die im Schritt der Phasenberechnung berechnet wird, unter Verwendung des Phasenkorrekturwertes, der im Schritt der Phasenkorrektur berechnet wird, und Erzeugen eines Ansteuersignals zum Ansteuern des Umschaltelements unter Verwendung der Phase nach der Korrektur,
**dadurch gekennzeichnet, dass** der Schritt der Phasenkorrektur Folgendes beinhaltet
einen Schritt der Phasenkorrektursollwerterfassung zum Einstellen eines Phasenkorrekturwertes, der zu einem Leistungsfaktor eines vorgeschriebenen Wertes oder größer führt, als einen Phasenkorrektursollwert, vorab Halten von Informationen, die Phasenkorrektursollwerte und Eingangsströme verknüpfen, und Erfassen eines Phasenkorrektursollwertes, der einem Eingangsstromwert entspricht, aus den Informationen, und
einen Schritt der Phasenkorrekturwerteinstellung zum Einstellen eines Phasenkorrekturwertes zum Angleichen an den Phasenkorrektursollwert.

## Revendications

1. Dispositif de commande (15, 15') pour un convertisseur dans lequel une pluralité de circuits d'amélioration de facteur de puissance (10a, 10b) comportant une inductance (6a, 6b), un élément de commutation (8a, 8b), et une diode (7a, 7b) sont connectés en parallèle, le dispositif de commande comprenant :
des moyens de calcul de phase (30) configurés pour calculer une phase sur la base d'un point de passage par zéro d'une tension d'entrée ;
des premiers moyens de correction de phase (40, 46) configurés pour établir une valeur de correction de phase (φ) en utilisant un signal de détection de courant d'entrée ;
des moyens de génération de signal de commande (50) configurés pour corriger la phase (θ) calculée par les moyens de calcul de phase (30) en utilisant la valeur de correction de phase (φ) établie par les premiers moyens de correction de phase (40, 46) et pour générer un signal de commande (Sg1, Sg2) pour commander l'élément de commutation (8a, 8b) en utilisant la phase après correction,
**caractérisé en ce que** les premiers moyens de correction de phase (40, 46) comprennent :
des moyens de calcul de facteur de forme (41) configurés pour acquérir une valeur maximum de courant d'entrée et une valeur moyenne de courant d'entrée à partir du signal de détection de courant d'entrée et pour calculer un facteur de forme en divisant la valeur maximum de courant d'entrée par la valeur moyenne de courant d'entrée,
des moyens d'acquisition de facteur de forme cible (42) configurés pour établir un facteur de forme conduisant à un facteur de puissance d'une valeur prescrite ou plus grande en tant que facteur de forme cible, pour conserver des premières informations associant des facteurs de forme cibles et des courants d'entrée au préalable, et pour acquérir un facteur de forme cible correspondant à une valeur de courant d'entrée à partir des premières informations, et
des premiers moyens d'établissement de valeur de correction de phase (43) configurés pour établir une valeur de correction de phase pour faire en sorte que le facteur de forme s'approche du facteur de forme cible.

2. Dispositif de commande (15') pour un convertisseur selon la revendication 1, comprenant en outre :
des moyens de commutation de mode (60) configurés pour sélectionner un mode unique de mise en œuvre d'un circuit d'amélioration de facteur de puissance (8a) dans un cas dans lequel la valeur de courant d'entrée est inférieure ou égale à une valeur de courant prescrite et pour sélectionner un mode double de mise en œuvre d'au moins deux circuits d'amélioration de facteur de puissance (8a, 8b) dans un cas dans lequel la valeur de courant d'entrée dépasse la valeur de courant prescrite,
des premiers moyens de correction de phase (46) configurés pour établir une valeur de correction de phase pour un mode double ; et
des deuxièmes moyens de correction de phase (47) configurés pour établir une valeur de correction de phase pour un mode unique,
dans lequel les deuxièmes moyens de correction de phase comprennent :
des moyens d'acquisition de valeur de correction de phase cible (71) configurés pour établir une valeur de correction de phase conduisant à un facteur de puissance d'une valeur prescrite ou plus grande en tant que valeur de correction de phase cible, pour conserver des deuxièmes informations associant des valeurs de correction de phase cibles et des courants d'entrée, et pour acquérir une valeur de correction de phase cible correspondant à une valeur de courant d'entrée à partir des deuxièmes informations, et
des deuxièmes moyens d'établissement de valeur de correction de phase (72) configurés pour établir une valeur de correction de phase de manière à ce qu'elle corresponde à la valeur de correction de phase cible, et
les moyens de génération de signal de commande (50) sont configurés pour générer le signal de commande (Sg1, Sg2) en utilisant la valeur de correction de phase établie par les deuxièmes moyens de correction de phase (47) dans un cas dans lequel le mode unique est sélectionné par les moyens de commutation de mode (60), et pour générer le signal de commande en utilisant la valeur de correction de phase établie par les premiers moyens de correction de phase (46) lorsque le mode double est sélectionné par les moyens de commutation de mode (60).

3. Dispositif de conversion (2, 2') comprenant :
un convertisseur dans lequel une pluralité de circuits d'amélioration de facteur de puissance (10a, 10b) comportant une inductance (6a, 6b), un élément de commutation (8a, 8b), et une diode (7a, 7b) sont connectés en parallèle ; et
le dispositif de commande (15, 15') selon la revendication 1 ou 2.

4. Dispositif de commande de moteur (1) comprenant :
le dispositif de conversion (2, 2') selon la revendication 3.

5. Climatiseur comprenant :
le dispositif de commande de moteur (1) selon la revendication 4.

6. Procédé de commande pour un convertisseur (2, 2') dans lequel une pluralité de circuits d'amélioration de facteur de puissance (10a, 10b) comportant une inductance (6a, 6b), un élément de commutation (8a, 8b), et une diode (7a, 7b) sont connectés en parallèle, le procédé de commande comprenant :
une étape de calcul de phase pour calculer une phase (θ) sur la base d'un point de passage par zéro d'une tension d'entrée ;
une étape de correction de phase pour calculer une valeur de correction de phase en utilisant un signal de détection de courant d'entrée ; et
une étape de génération de signal de commande pour corriger la phase calculée à l'étape de calcul de phase en utilisant la valeur de correction de phase calculée à l'étape de correction de phase et pour générer un signal de commande pour commander l'élément de commutation en utilisant la phase après correction,
**caractérisé en ce que** l'étape de correction de phase comprend :
une étape de calcul de facteur de forme pour acquérir une valeur maximum de courant d'entrée et une valeur moyenne de courant d'entrée à partir du signal de détection de courant d'entrée et pour calculer un facteur de forme en divisant la valeur maximum de courant d'entrée par la valeur moyenne de courant d'entrée,
une étape d'acquisition de facteur de forme cible pour établir un facteur de forme conduisant à un facteur de puissance d'une valeur prescrite ou plus grande en tant que facteur de forme cible, pour conserver des informations associant des facteurs de forme cibles et des courants d'entrée au préalable, et pour acquérir un facteur de forme cible correspondant à un courant d'entrée à partir des informations, et
une étape d'établissement de valeur de correction de phase pour établir une valeur de correction de phase pour faire en sorte que le facteur de forme s'approche du facteur de forme cible.

7. Procédé de commande pour un convertisseur (2, 2') dans lequel une pluralité de circuits d'amélioration de facteur de puissance (10a, 10b) comportant une inductance (6a, 6b), un élément de commutation (8a, 8b), et une diode (7a, 7b) sont connectés en parallèle, le procédé de commande comprenant :
une étape de calcul de phase pour calculer une phase sur la base d'un point de passage par zéro d'une tension d'entrée ;
une étape de correction de phase pour calculer une valeur de correction de phase en utilisant un signal de détection de courant d'entrée ; et
une étape de génération de signal de commande pour corriger la phase calculée à l'étape de calcul de phase en utilisant la valeur de correction de phase calculée à l'étape de correction de phase et pour générer un signal de commande pour commander l'élément de commutation en utilisant la phase après correction,
**caractérisé en ce que** l'étape de correction de phase comprend :
une étape d'acquisition de valeur de correction de phase cible pour établir une valeur de correction de phase conduisant à un facteur de puissance d'une valeur prescrite ou plus grande en tant que valeur de correction de phase cible, pour conserver des informations associant des valeurs de correction de phase cibles et des courants d'entrée au préalable, et pour acquérir une valeur de correction de phase cible correspondant à une valeur de courant d'entrée à partir des informations, et
une étape d'établissement de valeur de correction de phase pour établir une valeur de correction de phase de manière à ce qu'elle corresponde à la valeur de correction de phase cible.
